# EUROPEAN PATENT SPECIFICATION

(11) **EP 1 989 065 B1**
(45) Date of publication and mention of the grant of the patent: **22.07.2009**
(21) Application number: 06847026.9
(22) Date of filing: 08.12.2006
(51) Int. Cl.: B60C 27/10

(54) **AUXILIARY PULLING APPARATUS FOR FACILITATING INSTALLATION OF ANTI-SKID DEVICES**
ZUSATZZUGVORRICHTUNG ZUR ERLEICHTERUNG DER INSTALLATION VON GLEITSCHUTZVORRICHTUNGEN
APPAREIL DE TRACTION AUXILIAIRE POUR FACILITER L INSTALLATION DE DISPOSITIFS ANTI-DERAPAGE

(30) Priority: 09.12.2005 EP 05111918
(43) Date of publication of application: 12.11.2008
(73) Proprietor: Bozkurt, Emrah, 80690 Istanbul (TR); Bozkurt, Ender, 80690 Istanbul (TR); Yerlikaya, Murat, 80690 Istanbul (TR)
(72) Inventor: Bozkurt, Emrah, 80690 Istanbul (TR); Bozkurt, Ender, 80690 Istanbul (TR); Yerlikaya, Murat, 80690 Istanbul (TR)
(74) Representative: Sevinç, Erkan
(86) International application number: PCT/EP2006/069483
(87) International publication number: WO 2007/065949

(56) References cited:
- EP-A- 0 074 492
- WO-A-20/04035332
- US-A- 3 228 446
- US-A- 3 913 651

## Description

### TECHNICAL FIELD OF THE INVENTION

The present invention relates to an auxiliary apparatus for installing anti-skid or traction enhancement devices onto wheels of vehicles. As is well known in the prior art, a very large number of anti skid devices have a retaining ring mounted on the rear part of a wheel along the shoulder or sidewall periphery of the tire. The closed circle form of the retaining ring shall be deformable for allowing installation or un-installation of the anti-skid device without removing the wheel from the hub. Generally, the retaining ring is made of a durable wire whose two ends are provided with fastening means such as buckles or attachment clips. The retaining ring is used to fasten surface contact members of the anti skid device and helps to keep the integrity of the device. These surface contact members are usually in the form of chain portions or rigid or semi-rigid traction elements that are located on top of the treaded surfaces of the tire. The present invention relates to an auxiliary apparatus which helps to pull one end of a retaining ring to attach to the other end of the retaining ring.

### DESCRIPTION OF THE PRIOR ART

It is generally very difficult to attach one end of the retaining ring to its other end in many conventional anti skid devices. The difficulty arises from a number of reasons among which the first one is most probably the fact that the user's hands have to work behind the wheel. The tire is generally dirty, wet or covered with mud or snow and the user's hands cannot work comfortably in order to avoid dirtying sleeves of his or her clothing. Furthermore, the anti skid device is generally heavy and the user has to spend considerable hand force for holding the device properly in place and securing the ends of the retaining ring to each other. During the start of the installation, the retaining ring is placed around the axle behind the wheel and the user pulls one end of the ring to its other end for fastening the open ends of the ring to each other. This stage is one of the most difficult stages in the entire installation process mainly because the ends of the retaining ring usually do not tend towards each other. This is simply because the retaining ring has a limited length which determined by the size of the wheel and all other parts of the anti-skid device shall be standing in an appropriate place for attaching the two ends.

For dual wheels, e.g. as in the case of many small to large weight buses or trucks, the situation is much more complicated and problematic due to the presence of the second wheel in working volume of the hands.

US 3 913 651 discloses a tire chain having two principle counterbalanced chain portions which upon installation can be draped quickly. The tire chain has a short length throw through small link chain connected at one end of the back cross tie chain and thrown , behind the wheel. This small link chain is used to pull one end of the back cross tie chain to its other end. This pulling operation can only be done in one direction due to the fact that small link chain must be attached to the longer end of the back cross tie chain. A major drawback of the small link chain is that it readily piles when thrown behind the wheel and fails to function properly due to its structural nature, i.e. the plurality of chain links. Furthermore, it is more likely that small link chains get stuck in between the mud or snow existing on the ground behind the wheel. Other drawbacks may be exemplified with the risk of sticking to the user's hands in very cold weathers or with the corroding metal parts.

DE 33 08 155 shows a device for quickly attaching and hooking on the ends of snow chains on motor vehicles in the region of the inner part of the tire pointing towards the motor vehicle. The device has a hook attached to one end of the snow chain and a ring attached to the other end of the snow chain. It also has a correspondingly long, flexible element, such as a chain, a cord, a cable or the like, which is provided at one end with a small ring. The small ring is hooked on to the hook and the other end of the accessory chain is inserted into the ring attached to the snow chain and then drawn through said ring. Similar to the former example, the major drawback of the accessory chain is that it can readily pile onto itself and fail to function properly due to its structural nature. Likewise, it is more likely that small link chains get stuck in between the mud or snow existing on the ground behind the wheel. Moreover, the flexible element may not pass inside the ring behind the wheel or the hook may not catch the ring after the flexible element is drawn. Also, installation can only be done in one direction due to the fact that the flexible element must be attached only to the hook and not to the ring.

EP 0 074 492 A2 in the name of Gianfranco shows a device with features of the preamble of claim 1, for stretching snow chains on wheels by exerting a pull on a resiliently deformable element pivotally connected to one end of a mounted chain until hooking said deformable element to the opposite end of the mounted chain. The device comprises a cable with a handgrip and a knot. The cable can be inserted in an opening carried by a plate at the free end of the resilient element and can be fixed in a groove near the opposite end of the mounted chain, by means of its knot. By exerting a pull on said handgrip, the chain and the resilient element are stretched until hooking a bore in said plate on a pin carried by said chain opposite end. The auxiliary pulling apparatus of the present invention differs in many ways from the stretching device of Gianfranco in that the handgrip element is used to pull-stretch a cable for tightening an already installed snow chain on a tire. The present invention is used to install a show chain on a tire, rather than for tightening an already installed chain system. Furthermore, Gianfranco does not foresee using the inertia of a mass attached to a distal end of the apparatus for attaching a first end of the retaining ring to the second end.

WO2004/035332 in the name of Park shows a foldable snow chain for car tires. The chain as proposed by Park has snow pads that pass across the tread of a tire at regular intervals when the chain fully expands and is worn around the tire. A pad connector is connected to each end of each snow pad with a rim connector coupled to the pad connector by a ring-shaped coupler to extend in a radial direction of the tire. The chain system of Park is far from the pulling apparatus according to the present invention as Park does not foresee using the inertia of a mass for attaching the first end of a retaining ring to its second end.

### SUMMARY OF THE INVENTION

The auxiliary pulling apparatus of the present invention is removably attached to one end of the retaining ring in order to allow the user to install the anti skid device on the wheel from the outer face of the wheel without laying the anti skid device on the ground and reaching behind the wheel to fasten the ends of the ring. The user can easily attach the auxiliary pulling apparatus to any of the ends of the retaining ring. This provides great flexibility, freedom, and comfort to the user irrespective of whether the user is right-handed or left-handed.

A mass, preferably in spherical shape, is attached to the second end of the auxiliary pulling apparatus of the present invention. This mass provides the opportunity to get advance of centrifugal forces when the pulling apparatus is attached to one end of the retaining ring and thrown towards the other end behind the wheel. The ball shaped mass of the preferred embodiment is attached by a rotatable joint which is adapted to pivot the ball along a circular trajectory.

### OBJECTS OF THE PRESENT INVENTION

An object of the present invention is to provide auxiliary apparatus which helps to pull the first end of a retaining ring of an anti skid device to its second end.

Another object of the present invention is to provide auxiliary pulling apparatus which does not pile or roll onto itself when thrown towards the second end of a retaining ring.

Another object of the present invention is to provide auxiliary pulling apparatus whose structure eliminates or at least reduces the risk of getting stuck or jamming in the mud or snow behind a wheel.

Another object of the present invention is to provide auxiliary pulling apparatus which is attached to an end of a retaining ring at its first end and which comprises a mass at its second end, the mass being used for ensuring easy guiding of the first end of the retaining ring and reducing the risk of jamming, piling or inappropriately rolling of the pulling apparatus on the ground.

### BRIEF DESCRIPTIONS OF THE DRAWINGS

In the following, the invention is described in more detail with reference to the drawings, which are given solely for the purpose of exemplifying the invention, in which:
Fig. 1A shows a 2-dimensional view of the pulling apparatus according to an embodiment of the present invention.
Fig. 1B shows a 2-dimensional view of the pulling apparatus according to an alternate embodiment in which the rope section of the pulling device is provided with projections.
Fig. 2A illustrates the initial installation moment of the attachment of the retaining ring on a single wheel, the circular trajectory (w) of the ball shaped mass of the pulling apparatus as well as the rolling movement of the ball shaped mass.
Fig. 2B shows a sample attachment clips with pivotable joint for securing the first end of the pulling apparatus secured on the attachment means of a retaining ring.
Fig. 2C illustrates the first end of the retaining ring pulled onto the second end when the mass of the pulling apparatus completes its trajectory behind the wheel.
Fig. 3A shows the auxiliary pulling apparatus right before it is thrown through the clearance in between the tires of a dual wheel.
Fig. 3B shows the thrown pulling apparatus at a later stage of attachment process of the retaining ring illustrated in Fig. 3A.
Fig. 4 shows attachment process of a retaining ring using conventional techniques of prior art.

### DETAILED DESCRIPTION OF THE INVENTION

Hereinafter, preferred embodiments of the present invention will be described in detail with reference to the accompanying drawings.

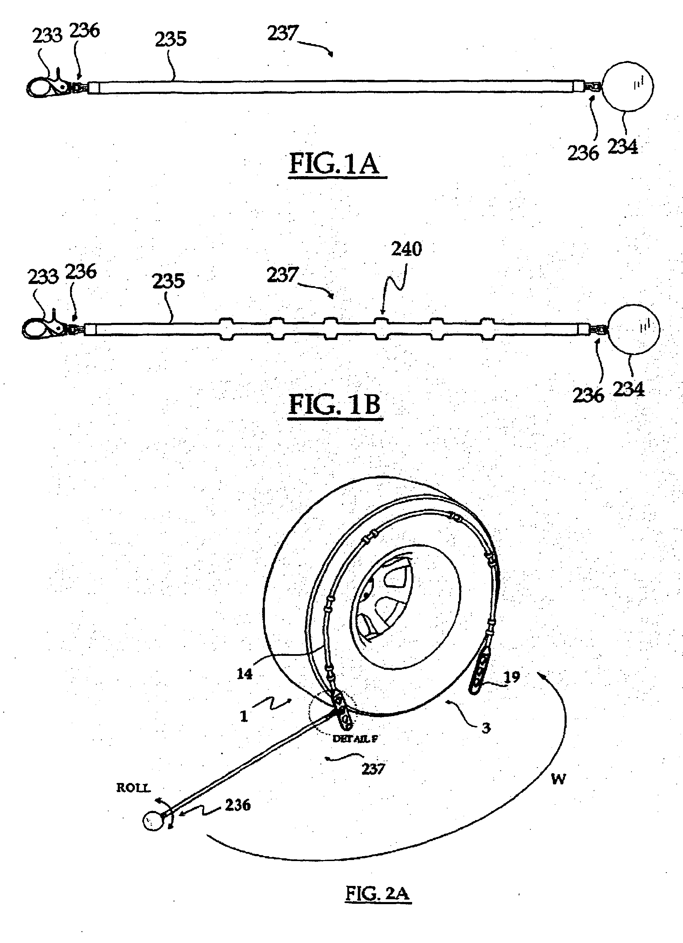

Fig. 1A shows an auxiliary pulling apparatus (237) comprising, at its first end on the left part, a fastener (233) which is generally in the form of a clip, a clasp, or a carabiner made of durable rigid material preferably with low heat transfer coefficient or coated metal. The auxiliary pulling apparatus (237) comprises a rope portion (235) in an appropriate length, generally but not necessarily longer than the diameter of the wheel. A mass (234) which underlies the principle idea behind the invention is attached to the outer end of the rope portion (235). A rotating joint (236) is foreseen for attachment of the mass (236) to the rope portion (235), and the fastener (233) to the retaining ring (14). The rotating joint (236) shall enable rotation of the mass at least around one coordinate axis.

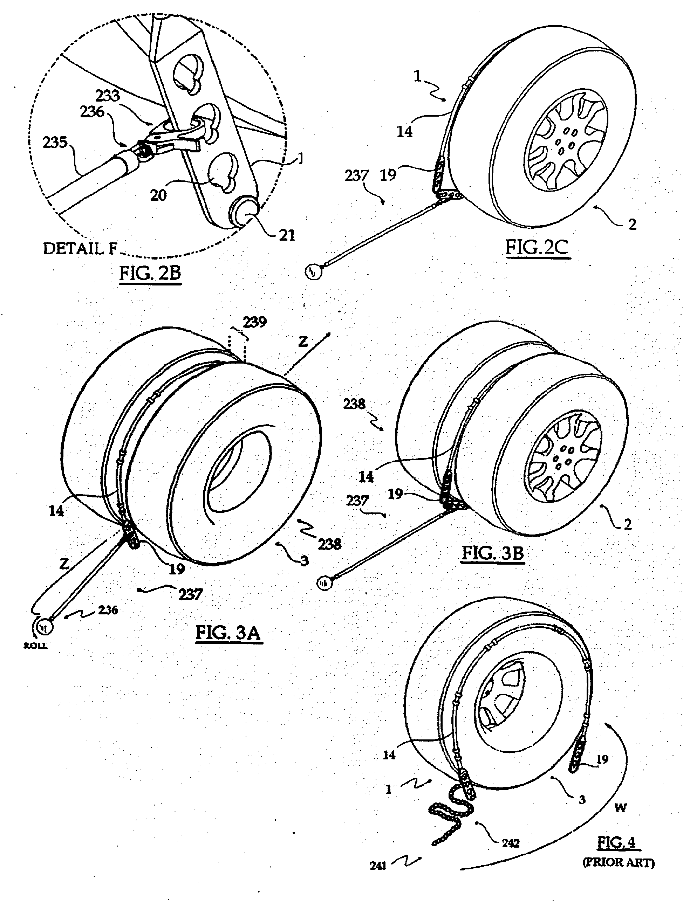

The rope portion (235) is shall be made of flexible, hydrophobic and durable materials such as polymers, etc. The mass (234) may be made of durable and rubber-like polymers with sufficient weight that prevents it from hopping and going to an undesired region under or around the vehicle. User attaches the pulling apparatus (237) to the first end of retaining ring (14) as shown in Fig. 2A. Then, user throws and/or rolls the pulling apparatus (237) in direction W (Fig. 2A) behind the wheel 1. Apparently, the mass will follow a near circular trajectory behind the wheel and reach the other hand of the user. The user pulls said first end towards the second end and juxtapose fasteners (19) as shown in Fig. 2C., then the user can secure fasteners (19) easily since he or she can clearly see both fasteners (19) from the outer side (2) of the wheel (1). The pulling apparatus (237) is released from the retaining ring and used on other anti skid devices proposed on the vehicle's wheels.

Similarly, Fig. 3A shows the use of pulling apparatus (237) for dual wheels (238). Briefly, the pulling apparatus device is installed on the outer tire of the dual wheels (238). By passing the pulling apparatus (237) in direction Z (see Fig. 3A) from the clearance (239) between the tires of the dual wheel (238), the first end the second end portions of the retaining ring (14) can be juxtaposed as.shown in Fig. 3B., then the user can secure fasteners (19) easily since he/she can clearly see both fasteners (19) from the outer side (2) of the dual wheel (238). The pulling apparatus (237) is released from the retaining ring and used on other anti skid devices proposed on the vehicle's wheels.

The rope portion (235), in an alternate embodiment, is provided with a plurality of projections (240) as illustrated in Fig. 1B. The projections (240) facilitate handling of the rope and prevent slippery of the rope portion from hands of the user while handling under wet or icy conditions, e.g. when pulling.

The preferred embodiment comprises a mass (234) which is spherical in shape, for allowing easy rotation along the near-circular trajectory (w) and also around the principle axis of the straight rope portion. The rotating joint (236) shall allow for rotation around at least one axis so as to permit free rotation of the mass (234) around itself (see rolling action in Fig. 2A) while rotating around behind the wheel along the near-circular path (w).

It is also noted that the preferred embodiment having the ball shaped mass (234) connected rotatably at its outer end has a further advantage during the near-circular sweep (Fig. 2A) of the mass. When the mass is thrown towards the axle of the wheel, the mass (234) helps the rope portion (235) remain tight and straight in result of the centrifugal force that occurs during the near-circular sweep (w). Apparently, it is the inertial force acting on the mass (234) that helps the rope section remain tight and straight. Recalling that the ball shaped mass has a certain radius, it is found that the entire rope section will remain at a height which is equal to the radius of the ball around the entire sweep (w), thereby reducing the risk of getting stuck or jamming in mud or other obstacles that may potentially exist under the vehicle.

The preferred embodiment of the auxiliary pulling apparatus has a single piece rope portion (235) which is made of semi-soft polymers that eliminates the major drawback of the other accessory chains mentioned in the prior art. This structure of the rope section prevents auxiliary pulling apparatus from being bent over itself unlike the sagging regions (242) of the accessory chain (241) illustrated in Fig. 4.

A further advantage of the auxiliary pulling apparatus of the present invention over the prior art accessory chains reveals itself in the fact that the auxiliary pulling apparatus (237) can be installed and used either from the first or the second end of the retaining ring. This facilitates installation and use by both left handed and right handed users.

The present method of fastening the retaining ring (14) from the outer side (2) of the wheel (1 or 238) outclasses other conventional fastening methods of the prior art simply because the user is not required to reach the behind of the wheel to fasten the ends of the retaining ring (14). Needless to mention, the user is either not required to lay the device on the ground, jack up the vehicle, or move the vehicle onto a previously laid anti skid device.

## Claims

1. An auxiliary pulling apparatus (237) for attachment of the two ends of a flexible retaining ring (14) in an anti skid device, said auxiliary pulling apparatus comprising a first attachment means (233) at its first end and a rope portion (235) connected to said first attachment means, **characterized in that** the auxiliary pulling apparatus further comprises a mass (234) which is connected to the second end of said rope portion (235) and which is smooth in shape so as to allow rolling or rotation on a road surface.

2. An auxiliary pulling apparatus (237) as set forth in claim 1 wherein the mass (234) is spherical in shape.

3. An auxiliary pulling apparatus (237) as set forth in claim 2 wherein the mass (234) is connected to outer end of said rope portion (235) by means of a joint (236) which allows rotation of said mass (234) around at least one axis.

4. An auxiliary pulling apparatus (237) as set forth in claim 1 wherein said rope portion (235) has a plurality of outward projections (240) adapted to facilitate handling of the auxiliary pulling apparatus.

5. An auxiliary pulling apparatus (237) as set forth in claim 1 wherein said rope portion (235) is attached to said first attachment means (233) by means of a joint (236) adapted to allow at least one degree of rotational freedom at least around the principal axis of the rope portion.

6. An anti skid device comprising the auxiliary pulling apparatus (237) as set forth in any of the Claims 1 to 5.

## Patentansprüche

1. Zusatzzugvorrichtung (237) zum Befestigen der zwei Enden eines flexiblen Halterings (14) in einer Gleitschutzvorrichtung, wobei die Zusatzzugvorrichtung eine erste Befestigungseinrichtung (233) an ihrem ersten Ende und einen mit der ersten Befestigungseinrichtung verbundenen Seilabschnitt (235) aufweist, **dadurch gekennzeichnet, dass** die Zusatzzugvorrichtung ferner eine Masse (234) aufweist, die mit dem zweiten Ende des Seilabschnittes (235) verbunden ist und welche eine glatte Form besitzt, um so Rollen oder Drehen auf einer Wegoberfläche zu ermöglichen.

2. Zusatzzugvorrichtung (237) nach Anspruch 1, wobei die Masse (234) von kugelförmiger Gestalt ist.

3. Zusatzzugvorrichtung (237) nach Anspruch 2, wobei die Masse (234) mit dem äußeren Ende des Seilabschnittes (235) über ein Verbindungselement (236) verbunden ist, welches eine Drehung der Masse (234) um wenigstens eine Achse zulässt.

4. Zusatzzugvorrichtung (237) nach Anspruch 1, wobei der Seilabschnitt (235) mehrere Außenvorsprünge (240) besitzt, die dafür angepasst sind, eine Handhabung der Zusatzzugvorrichtung zu erleichtern.

5. Zusatzzugvorrichtung (237) nach Anspruch 1, wobei der Seilabschnitt (235) an der ersten Befestigungseinrichtung (233) mittels eines Verbindungselementes (236) angebracht ist, das dafür angepasst ist, wenigstens einen Drehungsfreiheitsgrad wenigstens um die Hauptachse des Seilabschnittes zuzulassen.

6. Gleitschutzvorrichtung, welche die Zusatzzugvorrichtung (237) nach einem der Ansprüche 1 bis 5 aufweist.

## Revendications

1. Appareil de traction auxiliaire (237) pour une attache des deux extrémités d'un anneau de retenue souple (14) dans un dispositif d'antidérapage, ledit appareil de traction auxiliaire comportant des premiers moyens d'attache (233) à sa première extrémité et une partie formant un câble (235) reliée auxdits premiers moyens d'attache, **caractérisé en ce que** l'appareil de traction auxiliaire comporte également une masse (234) qui est reliée à la seconde extrémité de ladite partie formant un câble (235) et qui présente une forme lisse de manière à permettre un roulement ou une rotation sur une surface de la route.

2. Appareil de traction auxiliaire (237) selon la revendication 1, dans lequel la masse (234) est de forme sphérique.

3. Appareil de traction auxiliaire (237) selon la revendication 2, dans lequel la masse (234) est reliée à une extrémité extérieure de ladite partie formant un câble (235) au moyen d'une articulation (236) qui permet une rotation de ladite masse (234) autour d'au moins un axe.

4. Appareil de traction auxiliaire (237) selon la revendication 1, dans lequel ladite partie formant un câble (235) a une pluralité de saillies s'étendant vers l'extérieur (240), adaptées pour faciliter une manipulation de l'appareil de traction auxiliaire.

5. Appareil de traction auxiliaire (237) selon la revendication 1, dans lequel ladite partie formant un câble (235) est attachée auxdits premiers moyens d'attache (233) au moyen d'une articulation (236) adaptée pour permettre au moins un degré de liberté de rotation au moins autour de l'axe principal de la partie formant un câble.

6. Dispositif d'antidérapage comportant l'appareil de traction auxiliaire (237) selon l'une quelconque des revendications 1 à 5.
